# EUROPÄISCHE PATENTSCHRIFT

(11) **EP 3 512 621 B1**
(45) Veröffentlichungstag und Bekanntmachung des Hinweises auf die Patenterteilung: **03.11.2021**
(21) Anmeldenummer: 17778196.0
(22) Anmeldetag: 14.09.2017
(51) Int. Cl.: B01F 3/08, B01F 5/02, B01F 5/10, C12C 11/00

(54) **VORRICHTUNG UND VERFAHREN ZUM MISCHEN EINES INHALTS EINES TANKS**
DEVICE AND METHOD FOR MIXING THE CONTENTS OF A TANK
DISPOSITIF ET PROCÉDÉ POUR MÉLANGER LE CONTENU D'UN RÉSERVOIR

(30) Priorität: 14.09.2016 DE 102016217500
(43) Veröffentlichungstag der Anmeldung: 24.07.2019
(73) Patentinhaber: Gea Brewery Systems GmbH, 97318 Kitzingen (DE)
(72) Erfinder: SOBOTTKA, Uwe, 97318 Kitzingen (DE)
(74) Vertreter: Mader, Joachim
(86) Internationale Anmeldenummer: PCT/EP2017/073130
(87) Internationale Veröffentlichungsnummer: WO 2018/050742

(56) Entgegenhaltungen:
- US-A- 923 571

## Beschreibung

### 1. Technisches Gebiet

Die Erfindung betrifft eine Vorrichtung und ein Verfahren Mischen eines Inhalts eines Tanks insbesondere in der Lebensmittelindustrie, Getränkeindustrie und Pharmaindustrie.

### 2. Stand der Technik

In der Getränkeindustrie ist es bekannt, zum Mischen eines Tankinhalts Düsenvorrichtungen innerhalb eines Tanks zu platzieren und Mengen des Tankinhalts mittels einer Pumpe durch die Düse zu leiten. Dadurch wird eine Strömung im Tank erzeugt, welche für eine Vermischung des Tankinhalts sorgt.

Aus der WO 2011/147958 A1 ist ein Verfahren zur beschleunigten Gärung und eine Vorrichtung zur Vermischung eines Tankinhalts bekannt. Die Vorrichtung umfasst eine Strahlpumpe, die zur Vermischung des Tankinhalts auf einer bestimmten Höhe im unterem Bereich eines Gärtanks angeordnet ist. Zur Vermischung wird am Tankauslauf Tankinhalt abgezogen und mittels einer Pumpe der Strahlpumpe als Treibmedium zugeführt. In der Strahlpumpe wird durch das Treibmedium eine Menge an Tankinhalt ansaugt und mit dem Treibmedium vermischt und nach oben in den Tank hineingespritzt, wo eine weitere Mischung des Tankinhalts stattfindet.

Die Vorrichtung der WO 2011/147958 A1 ist daher gut in der Lage einen Tankinhalt zu Mischen und etwa Gärhefe in einem Gärtank bei der Bierherstellung in Schwebe zu halten. Jedoch muss diese Vermischung gestoppt werden, wenn der Tank entleert werden soll.

Aus der US 923 571 A ist eine Vorrichtung zum Umwälzen einer breiigen Flüssigkeit in einem Tank bekannt, bei der die Flüssigkeit an der Wand des Tanks abgezogen wird und mittels einer Zentrifugalpumpe über ein vertikal im Tank angeordneten Rohr auf eine konische Scheibe oberhalb des Flüssigkeitsspiegels im Tank gepumpt wird. Die Flüssigkeit läuft dann aufgrund der Schwerkraft auf der Scheibe nach außen und gelangt auf eine darunterliegende konische Platte, auf der die Flüssigkeit nach innen abläuft und in den Tank zurückfließt. Zum Entleeren des Tankinhalts, wird die Umwälzung gestoppt und der Festkörperanteil der breiigen Flüssigkeit sedimentiert. Danach wird der Flüssigkeitsanteil über dem Festkörperanteil abgezogen. Anschließend wird der Festkörperanteil abgezogen.

Bei der Kalthopfung, dem sog. "Dry Hopping", wird Hopfen in einen Tank mit einem Bier oder einem Biervorprodukt zugegeben. Ziel ist es, besondere Aromakomponenten aus dem Hopfen im Bier oder in dem Biervorprodukt zu lösen. Dazu muss idealerweise der Hopfen im Bier fein verteilt sein, um eine große Oberfläche und gute Stoffübergänge zu erzeugen. Das zum Dry Hopping verwendete Hopfenprodukt liegt in der Regel als Hopfenpellets vor, also als gemahlene und pelletierte Hopfendolden. Derartige Hopfenpellets zerfallen bei Kontakt mit Flüssigkeit in eine krümelige Struktur mit Partikelgrößen im Bereich von etwa 100-3000 µm. Die Suspension der Hopfenpartikel muss beim Dry Hopping für einen gestimmten Zeitraum aufrechterhalten werden, wobei der Hopfen die Tendenz zur Sedimentation zeigt. Es ist daher notwendig, den Tankinhalt während des Dry Hoppings möglichst gut zu Vermischen. Da auch während des Ablassens des Tankinhalts, das bei den üblichen großen Tanks eine erhebliche Zeit in Anspruch nehmen kann, die Hopfenpartikel nicht sedimentieren sollen, sollte das Vermischen auch während des Ablassens aufrechterhalten werden, was mit den Mischvorrichtungen aus dem Stand der Technik nicht möglich ist. Die abgelassene Suspension "Hopfen in Bier" soll dabei eine nur kleine Feststoffkonzentration aufweisen, damit die Hopfenpartikel anschließend mittels einer Zentrifuge oder einem Separator ohne großen Verlust an Bier aus der Suspension gefiltert werden können.

Es ist daher die Aufgabe der vorliegenden Erfindung eine Vorrichtung und ein Verfahren zum Mischen eines Tankinhalts bereitzustellen, welche auf einfache Weise eine Mischung des Tankinhalts bei und nach unterschiedlichen Verfahrensbedingungen gewährleistet. Beispielsweise soll ein Mischen während der Verarbeitungszeit im Tank, nach einer vorangehenden Sedimentationsphase, während einer Teil-Sedimentationsphase und auch beim Ablassen des Tanks gewährleistet sein.

### 3. Zusammenfassung der Erfindung

Die oben genannten Aufgaben werden gelöst durch eine Vorrichtung zum Mischen eines Tankinhalts gemäß Patentanspruch 1 sowie durch ein Verfahren zum Mischen eines Tankinhalts gemäß Patentanspruch 11.

Die oben genannten Aufgaben werden insbesondere gelöst durch eine Vorrichtung zum Mischen eines Inhalts eines Tanks aufweisend einen an einem Anschlussflansch eines Tanks angeordneten ersten Rohranschlusskörper, eine sich durch den ersten Rohranschlusskörper in den Tank hinein erstreckende Steigleitung, eine sich durch den ersten Rohranschlusskörper in den Tank hinein erstreckende Mischleitung und eine Pumpe, deren Auslass zumindest mit der Mischleitung verbindbar ist und deren Einlass sowohl mit dem ersten Rohranschlusskörper als auch mit der Steigleitung verbindbar ist. Unter einem Rohranschlusskörper soll jede Art von Verbindungselement für ein Rohr mit einem Tank verstanden werden. Dies können z.B. sog. Varivent-Anschlusselemente, aber auch Rohrbögen, T-Stücke oder ähnliches sein.

Damit ist die Vorrichtung flexibel verwendbar und kann den Tankinhalt zum Mischen bzw. Vermischen entweder von dem ersten Rohranschlussköper als auch von der Steigleitung abziehen und mittels einer Pumpe einer Mischdüse zuführen, die sich innerhalb des Tanks befindet. Dadurch, dass der Einlass der Pumpe auch mit der Steigleitung verbunden werden kann, ist es möglich, gleichzeitig während des Ablassens des Tanks über den Rohranschlusskörper eine Vermischung des Tankinhalts durchzuführen. Andererseits kann dadurch, dass der Einlass der Pumpe mit dem Rohranschlusskörper verbunden werden kann, zudem eine vollständige Vermischung des Tankinhalts erreicht werden, da in diesem Fall Tankinhalt zum Vermischen am tiefsten Punkt des Tanks abgezogen wird. Zusätzlich kann durch Verbinden der Steigleitung mit dem Einlass der Pumpe auch eine Vermischung des Tankinhalts ermöglicht werden, wenn gleichzeitig oder vorausgehend ein Teil des Tankinhalts gewollt sedimentieren soll und dieser Teil nicht mehr aufgewirbelt bzw. vermischt werden soll. Mit der vorliegenden Vorrichtung sind daher ganz unterschiedliche Betriebsweisen möglich, beispielsweise ein Mischen beim Ablassen oder ein Mischen nach vorheriger oder während der Sedimentation eines Teils des Tankinhalts. Die Vorrichtung ermöglicht daher neue Verarbeitungs- und Mischtechniken, wie sie beispielsweise beim Dry Hopping in der Bierherstellung verwendet werden können.

Bevorzugt ist der Auslass der Pumpe auch mit dem ersten Rohranschlusskörper verbindbar, wenn der Einlass der Pumpe mit der Steigleitung verbunden ist. Durch diese Verbindungsmöglichkeit kann Sediment, das sich nach einem Sedimentationsschritt an der tiefsten Stelle des Tanks, insbesondere im Bereich des Rohranschlusskörpers angesammelt hat, gelockert oder verdünnt werden, so dass es danach beispielsweise leichter abgezogen werden kann. Auch ist es dadurch möglich, Sediment wieder so weit zu verdünnen, dass nachfolgend eine vollständige oder teilweise Vermischung des Tankinhalts über die Mischleitung oder eine Mischdüse möglich ist, ohne dass die Gefahr einer Verstopfung der Mischleitung und der Mischdüse gegeben ist. Bereits sedimentiere Feststoffe können daher vollständig oder teilweise, mit dem restlichen Tankinhalt vermischt werden.

Bevorzugt ist der Auslass der Pumpe auch mit der Steigleitung verbindbar, wenn der Einlass der Pumpe mit dem ersten Rohranschlusskörper verbunden ist. Durch diese Verbindungsmöglichkeit kann beispielsweise eine sanfte Teilmischung des unteren Tankinhalts erfolgen, ohne die Mischleitung zu verwenden, die eine starke Mischwirkung auf den Tankinhalt aufweist. Außerdem kann diese Lösung auch dafür verwendet werden, wenn große Volumenströme im Tank zirkuliert werden sollen. Dies ist beispielsweise nötig, wenn in der Leitung zwischen erstem Rohranschlusskörper und der Steigleitung ein Wärmeübertrager installiert ist. Da die Kühlung von Tanks meist zügig passieren soll, müssen dazu hohe Massenströme gekühlt werden. Diese können meist nicht über die Mischleitung geleitet werden, da die Dimensionierung der Mischleitung gegebenenfalls nicht ausreicht. Das gleiche gilt natürlich auch für Erwärmungsvorgänge.

Bevorzugt verläuft die Mischleitung innerhalb der Steigleitung, weiter bevorzugt konzentrisch innerhalb der Steigleitung. Dies ermöglicht es, die Mischvorrichtung an einen gewöhnlichen Anschlussflansch eines Tanks, insbesondere eines zylindrokonischen Tanks (ZKT), anzuschließen, ohne den Tank selbst strukturell zu verändern. Damit kann jeder ZKT auf einfache und reversible Weise mit einer erfindungsgemäßen Mischvorrichtung ausgerüstet oder nachgerüstet werden. Die Beschreibung erklärt die Erfindung anhand eines ZKT. Sie ist aber gleichermaßen auch für Tanks mit beliebigen anderen Böden, z.B. Klöpperböden oder flache Böden anwendbar. Wenn hierin von einem Anschlussflansch gesprochen wird, dann sind damit auch geschweißte Verbindungen gemeint.

Bevorzugt erstreckt sich die Steigleitung im Wesentlichen vertikal nach oben in den Tank hinein und/oder ein weist ein offenes Ende auf. Damit kann die Steigleitung einerseits gut zum Ansaugen von Tankinhalt auf einem erhöhten Flüssigkeitsniveau verwendet werden. Andererseits kann damit die Steigleitung auch als Auslass auf einem erhöhten Flüssigkeitsniveau zum Vermischen von Tankinhalt verwendet werden.

Erfindungsgemäß weist die Vorrichtung weiterhin ein Ableitblech auf, das an der Steigleitung oberhalb des ersten Rohranschlusskörpers befestigt ist. Damit wird Sediment besser aufgewirbelt und verdünnt, wenn über den Rohranschlusskörper Tankinhalt wieder in den Tank eingebracht wird, der über die Steigleitung abgezogen wurde.

Bevorzugt ist am oberen Ende der Mischleitung eine Mischdüse angeschlossen. Durch die Mischdüse kann der Strahl des in den Tank eingebrachten Tankinhalts geformt werden, um so eine bessere Durchmischung des Tankinhalts zu erreichen.

Bevorzugt ist die Mischdüse eine Strahlpumpe, die eingerichtet ist, Tankinhalt aus dem Tank abzuziehen und mit Tankinhalt zu vermischen, der über die Mischleitung zur Mischdüse gepumpt wird. Damit kann die Mischdüse nicht nur den zu ihr gepumpten Tankinhalt in den Tank einspritzen, sondern diesen auch mit weiterem Tankinhalt vermischen, der durch sie selbst angesaugt wird. Somit ist eine sehr intensive Mischung des Tankinhalts möglich.

Bevorzugt ist die Mischleitung weiterhin zum Abziehen von Tankinhalt verwendbar. Werden die Mischdüse bzw. die Strahlpumpe wegelassen und das Ende der Mischleitung ragt ohne Anbauten in den Tank, kann dies auch von Vorteil sein. Dann kann auch die Mischleitung zum Abziehen des Tankinhaltes verwendet werden. Dieser Tankinhalt kann dann über die Steigleitung und/oder den ersten Rohranschlusskörper in den Tank zurückgeleitet werden, oder der Tankinhalt kann so aus dem Tank entleert werden. Dies ermöglicht dann das Einleiten und/oder das Abziehen von Tankinhalt auf einer weiteren Ebene im Tank. Dies ermöglicht erstmals eine noch größere Flexibilität bei der Verwendung eines Tanks im Bereich der Bierbereitung.

Bevorzugt ist das untere Ende der Steigleitung mit einem zweiten Rohranschlusskörper verbunden. Damit kann die Steigleitung über standardisierte Mittel in den Flüssigkeitskreislauf eingebunden werden.

Bevorzugt ist die Steigleitung kürzer als die Mischleitung. Damit ist das obere Ende der Mischleitung oder die Mischdüse im Tank auf einem höheren Niveau angeordnet, verglichen mit dem Ende der Steigleitung. Somit ergeben sich unterschiedliche Mischungsarten, je nach dem, ob die Steigleitung oder die Mischdüse als Auslass verwendet wird.

Bevorzugt erstreckt sich die Steigleitung mindestens eine Länge von 0,5 m, oder bevorzugt mindestens eine Länge von 1 m, oder bevorzugt mindestens eine Länge von 1,5 m gemessen vom Anschlussflansch in den Tank hinein.

Die Mischleitung, bevorzugt einschließlich Mischdüse, erstreckt sich mindestens eine Länge von 0,7 m oder bevorzugt mindestens eine Länge von 1,2 m oder bevorzugt mindestens eine Länge von 1,7 m gemessen vom Anschlussflansch in den Tank hinein. Diese Längen von Steigleitung und Mischleitung ggf. samt Mischdüse sind besonders vorteilhaft beim Vermischen von Hopfenpartikeln oder Hefezellen in einem Gärtank bei der Bierherstellung. Die Längen können von der Tankgröße und der Tankgeometrie abhängig sein.

Bevorzugt ist der erste Rohranschlusskörper weiterhin mit einer Ein- und Auslassleitung zum Befüllen und Entleeren des Tanks verbunden. Damit kann über den ersten Rohranschlusskörper der Tank befüllt und entleert werden, insbesondere auch wenn der Tankinhalt gleichzeitig gemischt wird. Diese Ein- und Auslassleitung muss jedoch nicht zwingend direkt am Rohranschlusskörper angeschlossen sein. Ein mittelbarer Anschluss ist auch möglich. Auch können Ein- und Auslassleitung kombiniert oder getrennt sein.

Die oben genannten Aufgaben werden auch gelöst durch ein Verfahren zum Mischen eines Inhalts eines Tanks aufweisend die folgenden Schritte:
a. Anordnen einer sich durch einen ersten Rohranschlusskörper am Anschlussflansch in den Tank hinein erstreckenden Steigleitung;
b. Abziehen von Tankinhalt entweder über die Steigleitung;
c. Pumpen des über die Steigleitung abgezogenen Tankinhalts mittels einer Pumpe;
d. Verschalten des Auslasses der Pumpe so dass sowohl ein Einbringen des über die Steigleitung abgezogenen Tankinhalts in den Tank über eine Mischleitung möglich ist, die sich durch den ersten Rohranschlusskörper in den Tank hinein erstreckt, als auch ein Einbringen des über die Steigleitung abgezogenen Tankinhalts in den Tank über den ersten Rohranschlusskörper möglich ist; und
e. Einbringen des abgezogenen Tankinhalts in den Tank und Vermischen des abgezogenen Tankinhalts mit dem übrigen Tankinhalt mittels der Mischleitung; und
f. Ablassen von Tankinhalt aus dem Tank über den ersten Rohranschlusskörper, wobei Ablassen und Vermischen gleichzeitig stattfinden.

Durch dieses Verfahren ist es sowohl möglich den aus dem Tank abgezogenen Tankinhalt über die Mischleitung als auch über den ersten Rohranschlusskörper wieder in den Tank einzubringen. Beim Einbringen über die Mischleitung kann der Tankinhalt gemischt werden und eine Sedimentation von Feststoffen ganz oder teilweise verhindert werden. Eine Teilsedimentation ist möglich, wenn der Tankinhalt über die Steigleitung abgezogen wird und über die Mischleitung wieder zugeführt wird. Eine vollständige Durchmischung ergibt sich hingegen, wenn der Tankinhalt über den ersten Rohranschlusskörper abgezogen wird und über die Mischleitung wieder zugeführt wird. Weiterhin kann im unteren Bereich des Tanks angesammeltes Sediment verdünnt oder wieder aufgewirbelt und vermischt werden, wenn über die Steigleitung oder über die Mischleitung Tankinhalt abgezogen wird und über den ersten Rohranschlusskörper zugeführt wird. Das erfindungsgemäße Verfahren erlaubt daher die flexible Nutzung der Mischvorrichtung für unterschiedliche Mischaufgaben. Insbesondere können mit dem Verfahren auch neue Bearbeitungs-, Misch- oder Sedimentationsprozesse durchgeführt werden, wie sie beispielsweise beim Dry Hopping bei der Bierherstellung vorteilhaft sind, wobei das Verfahren nicht darauf beschränkt ist.

Erfindungsgemäß weist das Verfahren weiterhin den Schritt des Ablassens von Tankinhalt aus dem Tank über den ersten Rohranschlusskörper auf, wenn in Schritt b. der Tankinhalt über die Steigleitung abgezogen wird, wobei Ablassen und Vermischen gleichzeitig stattfinden. Dieses gleichzeitige Vermischen und Ablassen verhindert ein Sedimentieren im Tank während des Ablassvorgangs. Dies gewährleistet eine homogene Suspension von Feststoffen in der abgelassenen Flüssigkeit, wie sie beispielsweise für das Entfernen von Hopfenpartikeln durch eine Zentrifuge oder einen Abscheider beim Dry Hopping notwendig ist.

Bevorzugt weist das Verfahren weiterhin den Schritt des Aufwirbelns von Sediment des Tankinhalts auf, wenn in Schritt b. der Tankinhalt über die Steigleitung abgezogen wird und der Auslass der Pumpe mit dem ersten Rohranschlussköper verbunden ist. Damit können im unteren Tankbereich angesammelte Sedimente gezielt aufgewirbelt oder verdünnt werden, um sie besser ablassen zu können oder um sie wieder mit dem Tankinhalt zu vermischen.

Bevorzugt wird das Verfahren zum Dry Hopping verwendet wird, wobei der Tank ein Gärtank ist und der Tankinhalt Hopfenpartikel aufweist. Das Verfahren kann besonders vorteilhaft beim Dry Hopping bei der Bierherstellung angewendet werden, insbesondere zum Homogenisieren der Hopfenpartikel in der Flüssigkeit auch während des zeitaufwendigen Ablassvorgangs.

### 4. Kurze Beschreibung der Zeichnungen

Im Folgenden werden bevorzugte Ausführungsformen der Erfindung mit Bezug auf die Zeichnungen beschrieben. In denen zeigt:
- Fig. 1:: eine geschnittene Seitenansicht eines unteren Bereichs eines zylindrokonischen Tanks mit einer Ausführungsform einer Vorrichtung zum Mischen des Tankinhalts und eine schematische Darstellung von weiteren Bestandteilen der Vorrichtung in einem Betriebsmodus zum Mischen des Tankinhalts;
- Fig. 2:: die Vorrichtung nach Fig. 1 in einem anderen Betriebsmodus beim Mischen des Tankinhalts;
- Fig. 3:: die Vorrichtung nach Fig. 1 in einem anderen Betriebsmodus beim Verdünnen oder Aufwirbeln von Sediment;

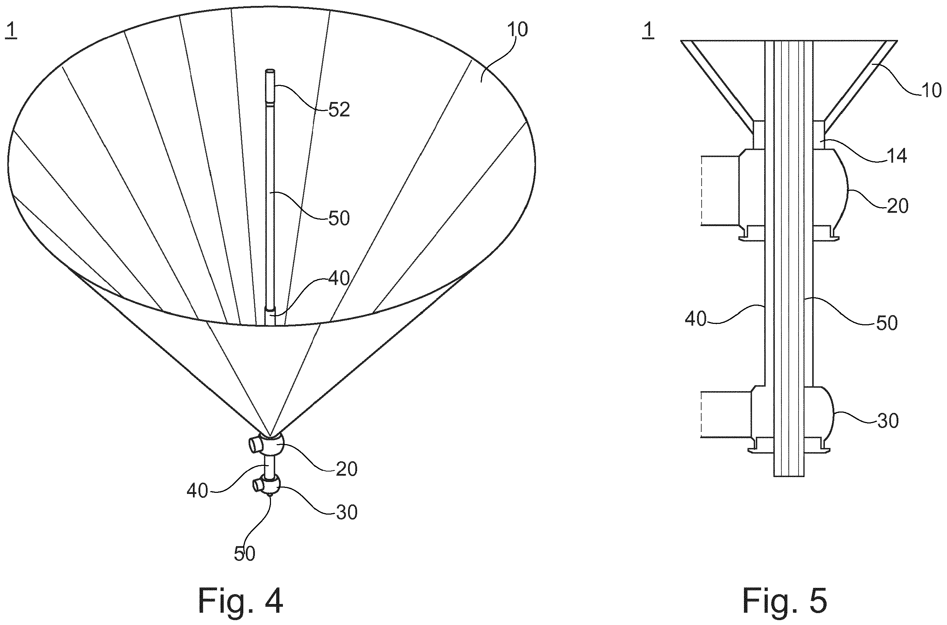

- Fig. 4:: eine dreidimensionale Teilansicht eines unteren Bereichs eines zylindrokonischen Tanks mit einer Ausführungsform einer Vorrichtung zum Mischen des Tankinhalts; und
- Fig. 5.: eine geschnittene Seitenansicht des unteren Bereichs des Tanks aus Fig. 4 mit Teilen der Vorrichtung zum Mischen des Tankinhalts im Detail.

### 5. Beschreibung bevorzugter Ausführungsformen

Im Folgenden werden bevorzugte Ausführungsformen der Erfindung mit Bezug auf die Zeichnungen im Detail beschrieben.

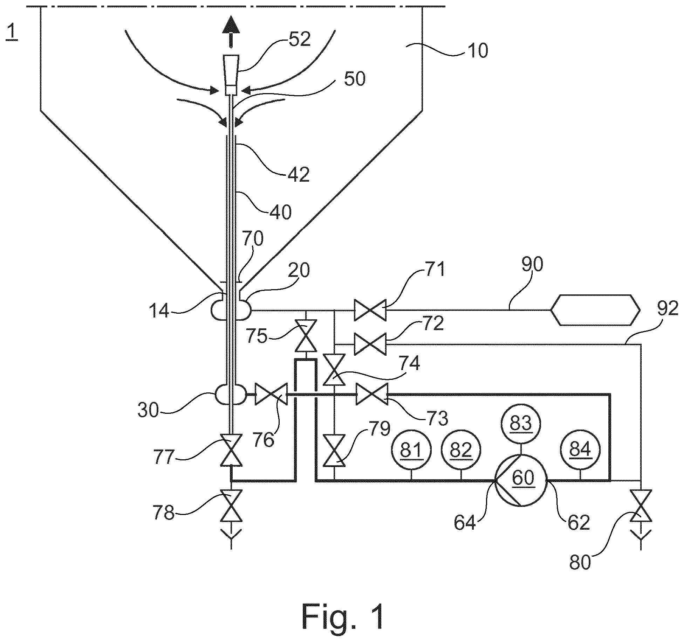

Fig. 1 zeigt einen unteren Bereich eines zylindrokonischen Tanks (ZKT) 10, wie er beispielsweise als Gär- und/oder Lagertank einer Brauerei verwendet wird mit einer Vorrichtung 1 zum Mischen von Tankinhalt. Am unteren kegelförmigen Auslaufbereich des Tanks 10 befindet sich ein Anschlussflansch 14 an den ein erster Rohranschlusskörper 20 angeschlossen ist. Über eine Hauptleitung 90, die an diesen ersten Rohranschlusskörper 20 an den Tank 10 angeschlossen ist, kann der Tank 10 befüllt und entleert werden. Der Anschlussflansch 14 hat bevorzugt eine Nennweite DN von 100 mm.

Als weitere Teile der Vorrichtung 1 erstreckt sich durch den Anschlussflansch 14 hindurch eine Steigleitung 40 in den Tank 10 hinein. Die Steigleitung 40 ist dabei im Wesentlichen vertikal ausgerichtet und durchdringt die Öffnung des Anschlussflansches 14 bevorzugt koaxial. Die Nennweite DN der Steigleitung beträgt bevorzugt 65 mm. Über die Steigleitung 40 kann der Tankinhalt aus dem Tank 10 auf einer gewissen Höhe abgezogen oder in den Tank 10 eingebracht werden. Am unteren Ende der Steigleitung 40 ist diese an einen zweiten Rohranschlusskörper 30 angeschlossen, der die Steigleitung 40 hydraulisch mit den übrigen Teilen der Vorrichtung 1 verbindet.

Zusätzlich erstreckt sich durch den Anschlussflansch 14 hindurch eine Mischleitung 50 in den Tank hinein. Die Mischleitung 50 verläuft im Wesentlichen koaxial innerhalb der Steigleitung 40 und ist ebenfalls vertikal ausgerichtet. Das obere Ende der Mischleitung 50 kann offen sein oder es kann eine Mischdüse 52 daran angeschlossen sein. Bevorzugt ist die Mischdüse 52 eine Strahlpumpe 52, die selbst Tankinhalt aus dem Tank 10 ansaugen und mit dem Treibmedium vermischen kann, das ihr durch die Mischleitung 50 zugeführt wird. Wenn keine Mischdüse 52 an der Mischleitung 50 installiert ist, kann die Mischleitung 50 auch zum Ansaugen von Tankinhalt benutzt werden.

Weiterhin weist die Vorrichtung 1 eine Pumpe 60 auf, die mittels einer Verrohrung 92 und Ventilen 71 - 80 auf unterschiedliche Weise mit dem ersten Rohranschlusskörper 20, mit der Steigleitung 40 und mit der Mischleitung 50 verbunden werden kann. Durch die unterschiedlichen Verschaltungsmöglichkeiten können unterschiedliche Betriebszustände der Vorrichtung zum Mischen, Sedimentieren und Reinigen (Cleaning in Place, CIP) eingestellt werden.

Zum Befüllen oder Entleeren des Tanks ohne gleichzeitiges Mischen ist das Ventil 71 geöffnet und alle anderen Ventile geschlossen.

Zum Mischen des Tankinhalts in einer ersten Betriebsart, wie sie in Fig. 1 dargestellt ist, sind die Ventile 73, 76 und 77 geöffnet und die anderen Ventile geschlossen. Der Einlass 62 der Pumpe 60 ist somit über den zweiten Rohranschlusskörper 30 mit der Steigleitung 40 verbunden. Der Auslass 64 der Pumpe 60 ist mit dem unteren Ende der Mischleitung 50 verbunden. Somit wird der Tankinhalt über die Steigleitung 40 abgezogen und der Pumpe 60 zugeführt. Diese ist in Betrieb und pumpt den abgezogenen Tankinhalt zur Mischleitung 50, die den Tankinhalt in einer erhöhten Position in den Tank 10 einbringt und so für eine Durchmischung des Tankinhalts sorgt. Je nach Leistung der Pumpe 60 kann auch eine Teil-Sedimentation im Bereich unterhalb des oberen Endes 42 der Steigleitung 40 erzielt werden. Die Leistung der Pumpe 60 kann über eine Drehzahlsteuerung 83 der Pumpe 60 geregelt werden.

Das Mischen der ersten Betriebsart kann zudem auch während des Ablassens von Tankinhalt aus dem Tank 10 durchgeführt werden. In diesem Fall ist die Pumpe 60 in Betrieb und die Ventile 71, 73, 76 und 77 geöffnet und die anderen Ventile geschlossen. Damit wird eine homogene Verteilung von suspendierten Partikeln in der Flüssigkeit auch während des Ablassens gewährleistet. Diese Betriebsart kann auch beim Befüllen des Tanks durchgeführt werden, um den Tankinhalt beim Befüllen zu Mischen.

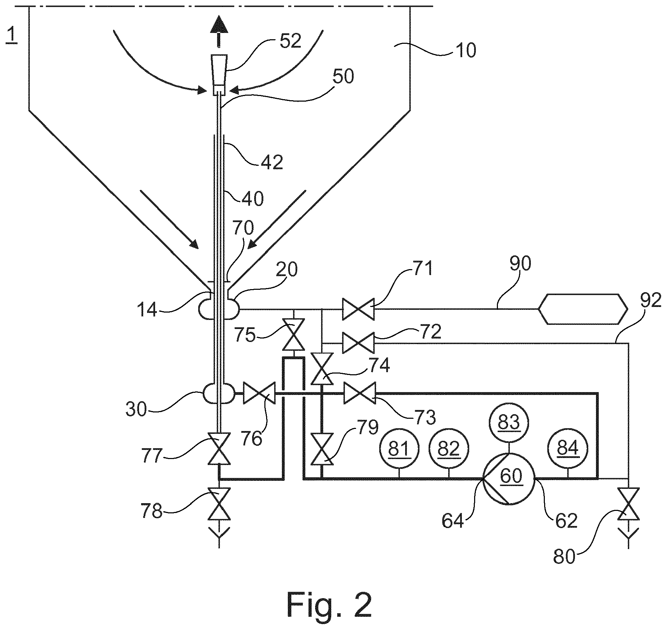

In einer weiteren in Fig. 2 dargestellten Betriebsart sind die Ventile 72 und 77 geöffnet, die anderen Ventile geschlossen und die Pumpe in Betrieb. Damit ist der Einlass 62 der Pumpe 60 mit dem ersten Rohranschlusskörper 20 verbunden und der Auslass 64 der Pumpe 60 mit dem Mischrohr 50. In dieser Betriebsart wird daher der Tankinhalt an der tiefsten Stelle des Tanks 10 abgezogen und über das Mischrohr 50 bzw. eine daran angeschlossene Mischdüse 52 dem Tank wieder zugeführt. Damit ergibt sich eine optimale Vermischung des gesamten Tankinhalts des Tanks 10.

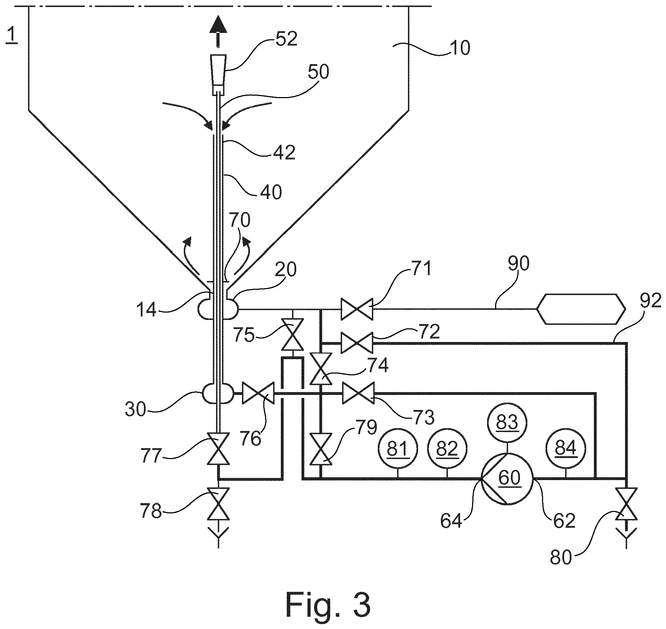

In einer weiteren in Fig. 3 dargestellten Betriebsart sind die Ventile 73, 75 und 76 geöffnet, die anderen Ventile geschlossen und die Pumpe 60 in Betrieb. Damit ist der Einlass 62 der Pumpe 60 mit der Steigleitung 40 verbunden und der Auslass 64 der Pumpe 60 mit dem ersten Rohranschlusskörper 20. In dieser Betriebsart kann sich im unteren Teil des Tanks 10 abgesetztes Sediment aufgewirbelt oder verdünnt werden, so dass es nachfolgend besser aus dem Tank 10 abgezogen oder wieder mit dem Tankinhalt vermischt werden kann. Zur Verbesserung der Verwirbelung des Sediments ist kurz über dem ersten Rohranschlussköper 20 ein Ableitblech 70 an der Steigleitung 40 befestigt. Dieses verwirbelt den von dem Rohranschlusskörper 20 kommenden Strom an Tankinhalt, so dass das Sediment besser erfasst wird.

In einer weiteren (nicht dargestellten Betriebsart) sind die Ventile 72, 76 und 79 geöffnet, die anderen Ventile geschlossen und die Pumpe 60 in Betrieb. Damit ist der Einlass 62 der Pumpe 60 mit dem ersten Rohranschlusskörper 20 verbunden und der Auslass 64 der Pumpe 60 ist mit der Steigleitung 40 verbunden. In dieser Betriebsart erfolgt ein Einbringen des abgezogenen Tankinhalts über die Steigleitung 40 und damit auf einem geringeren Niveau als über die Mischleitung 50 bzw. die Mischdüse 52. In dieser Betriebsart kann somit ein sanfteres Mischen erfolgen, als über die Mischdüse 52. Diese Betriebsart kann auch für z.B. einen Kühlprozess verwendet werden, da hier große Massenströme nötig sind. Diese Massenströme können ggf. nicht mehr durch die Mischleitung 50 gefördert werden, sondern müssen über die Steigleitung 40 in den Tank eingebracht werden. Ein notwendiger Wärmeübertrager (nicht dargestellt) ist dann variabel in eine beliebige Rohrleitung außerhalb des Tanks eingebunden. Ein denkbarer Ort wäre beispielsweise zwischen der Pumpe 60 und dem Ventil 79.

Insgesamt lassen sich mit der erfindungsgemäßen Vorrichtung 1 unterschiedlichste Betriebsarten verschalten, so dass die Vorrichtung 1 für unterschiedlichste Misch- und Sedimentationsanwendungen insbesondere in der Getränke- und Lebensmittelindustrie eingesetzt werden kann. Bevorzugt kann die Vorrichtung 1 bzw. das damit durchgeführte Verfahren in den unterschiedlichen Betriebsarten zum Dry Hopping in einem Bier-Brauverfahren eingesetzt werden.

Weiterhin ist die Vorrichtung für ein Cleaning in Place (CIP) geeignet. Zum CIP der Mischleitung 50 und der Mischdüse 52 sind die Ventile 72, 73, 74 und 77 geöffnet und die anderen Ventile geschlossen. Die Pumpe 60 ist beim CIP in Betrieb.

Zum CIP der Steigleitung 40 sind die Ventile 72, 76 und 79 geöffnet, die anderen Ventile geschlossen und die Pumpe 60 ist in Betrieb.

Zum CIP des Ventils 75 sind die Ventile 72, 73, 74 und 75 geöffnet, die anderen Ventile geschlossen und die Pumpe 60 ist in Betrieb.

Zum Ablassen der CIP Flüssigkeit aus der Vorrichtung 1 und dem Tank 10 sind alle Ventile 71 - 80 geöffnet und die Pumpe 60 ist außer Betrieb.

Die Vorrichtung 1 weist weiterhin Messgeräte 81, 82 und 84 auf, beispielsweise Durchflussmessgeräte für Volumen und/oder Masse, Temperaturmessgeräte, pH-Messgeräte, Druckmessgeräte, Trübungs- und/oder Farbmessgeräte oder andere Messgeräte für die Getränkeindustrie. Die genaue Anzahl und Anordnung von Messgeräten ist dabei beliebig.

## Patentansprüche

1. Vorrichtung (1) zum Mischen eines Inhalts eines Tanks (10) aufweisend
a. einen an einem Anschlussflansch (14) eines Tanks (10) angeordneten ersten Rohranschlusskörper (20);
b. eine sich durch den ersten Rohranschlusskörper (20) in den Tank hinein erstreckende Steigleitung (40);
c. eine sich durch den ersten Rohranschlusskörper (20) in den Tank hinein erstreckende Mischleitung (50);
d. eine Pumpe (60), deren Auslass (64) zumindest mit der Mischleitung (50) verbindbar ist und deren Einlass (62) sowohl mit dem ersten Rohranschlusskörper (20) als auch mit der Steigleitung (40) verbindbar ist; **dadurch gekennzeichnet, dass** die Vorrichtung
e. ein Ableitblech (70) aufweist, das an der Steigleitung (40) oberhalb des ersten Rohranschlusskörpers (20) befestigt ist.

2. Vorrichtung nach Anspruch 1, wobei der Auslass (64) der Pumpe (60) auch mit dem ersten Rohranschlusskörper (20) verbindbar ist, wenn der Einlass (62) der Pumpe (60) mit der Steigleitung (40) verbunden ist.

3. Vorrichtung nach einem der Ansprüche 1 oder 2, wobei der Auslass (64) der Pumpe (60) auch mit der Steigleitung (40) verbindbar ist, wenn der Einlass (62) der Pumpe (60) mit dem ersten Rohranschlusskörper (20) verbunden ist.

4. Vorrichtung nach einem der Ansprüche 1 bis 3, wobei die Mischleitung (50) innerhalb der Steigleitung (40) verläuft, bevorzugt konzentrisch innerhalb der Steigleitung (40) verläuft.

5. Vorrichtung nach einem der Ansprüche 1 bis 4, wobei die Steigleitung (40) sich im Wesentlichen vertikal nach oben in den Tank (1) hinein erstreckt und/oder ein offenes Ende (42) aufweist.

6. Vorrichtung nach einem der Ansprüche 1 bis 5, wobei die Mischleitung (50) weiterhin zum Abziehen von Tankinhalt verwendbar ist.

7. Vorrichtung nach einem der Ansprüche 1 bis 5, wobei am oberen Ende der Mischleitung (50) eine Mischdüse (52) angeschlossen ist.

8. Vorrichtung nach Anspruch 7, wobei die Mischdüse (52) eine Strahlpumpe ist, die eingerichtet ist, Tankinhalt aus dem Tank (10) abzuziehen und mit Tankinhalt zu vermischen, der über die Mischleitung (50) zur Mischdüse (52) gepumpt wird.

9. Vorrichtung nach einem der Ansprüche 1 bis 8, wobei das untere Ende der Steigleitung (40) mit einem zweiten Rohranschlusskörper (30) verbunden ist.

10. Vorrichtung nach einem der Ansprüche 1 bis 9 wobei die Steigleitung (40) kürzer ist als die Mischleitung (50).

11. Verfahren zum Mischen eines Inhalts eines Tanks (10) mit einer Vorrichtung nach einem der Ansprüche 1 bis 10 aufweisend die folgenden Schritte:
a. Anordnen einer sich durch einen ersten Rohranschlusskörper (20) am Anschlussflansch (14) in den Tank (10) hinein erstreckenden Steigleitung (40);
b. Abziehen von Tankinhalt über die Steigleitung (40);
c. Pumpen des über die Steigleitung (40) abgezogenen Tankinhalts mittels einer Pumpe (60);
d. Verschalten des Auslasses (64) der Pumpe (60), so dass sowohl ein Einbringen des über die Steigleitung (40) abgezogenen Tankinhalts in den Tank (10) über eine Mischleitung (50) möglich ist, die sich durch den ersten Rohranschlusskörper (20) in den Tank (10) hinein erstreckt, als auch ein Einbringen des über die Steigleitung (40) abgezogenen Tankinhalts in den Tank (10) über den ersten Rohranschlusskörper (20) möglich ist;
e. Einbringen des abgezogenen Tankinhalts in den Tank (10) und Vermischen des abgezogenen Tankinhalts mit dem übrigen Tankinhalt mittels der Mischleitung (50); und
f. Ablassen von Tankinhalt aus dem Tank (10) über den ersten Rohranschlusskörper (20), wobei Ablassen und Vermischen gleichzeitig stattfinden.

12. Verfahren nach Anspruch 11, weiterhin aufweisend den Schritt des Aufwirbelns von Sediment des Tankinhalts, wenn der Auslass (64) der Pumpe mit dem ersten Rohranschlussköper (20) verbunden ist.

13. Verfahren nach Anspruch 11 oder 12 wobei es zum Dry Hopping verwendet wird, und wobei der Tank (10) ein Gärtank ist und der Tankinhalt Hopfenpartikel aufweist.

## Claims

1. Device (1) for mixing a content of a tank (10) comprising
a. a first pipe connection body (20) arranged on a connection flange (14) of a tank (10);
b. a riser pipe (40) extending through the first pipe connection body (20) into the tank;
c. a mixing pipe (50) extending through the first pipe connection body (20) into the tank;
d. a pump (60), the outlet (64) of which is connectable at least to the mixing pipe (50) and the inlet (62) of which is connectable both to the first pipe connection body (20) as well as to the riser pipe (40); **characterized in that** the device
e. comprises a deflection plate (70) attached to the riser pipe (40) above the first pipe connection body (20).

2. Device according to claim 1, wherein the outlet (64) of the pump (60) is also connectable to the first pipe connection body (20), when the inlet (62) of the pump (60) is connected to the riser pipe (40).

3. Device according to any one of claims 1 or 2, wherein the outlet (64) of the pump (60) is also connectable to the riser pipe (40), when the inlet (62) of the pump (60) is connected to the first pipe connection body (20).

4. Device according to any one of claims 1 to 3, wherein the mixing pipe (50) extends within the riser pipe (40), preferably extends concentrically within the riser pipe (40).

5. Device according to any one of claims 1 to 4, wherein the riser pipe (40) extends substantially vertically upwards into the tank (10) and/or has an open end (42).

6. Device according to any one of claims 1 to 5, wherein the mixing pipe (50) is further usable for drawing-off tank contents.

7. Device according to any one of claims 1 to 5, wherein a mixing nozzle (52) is connected to the upper end of the mixing pipe (50).

8. Device according to claim 7, wherein the mixing nozzle (52) is a jet pump adapted to draw-off tank contents from the tank (10) and mix them with tank contents pumped to the mixing nozzle (52) via the mixing pipe (50).

9. Device according to any one of claims 1 to 8, wherein the lower end of the riser pipe (40) is connected to a second pipe connection body (30).

10. Device according to any one of claims 1 to 9, wherein the riser pipe (40) is shorter than the mixing pipe (50).

11. Method for mixing a content of a tank (10) with an apparatus according to any one of claims 1 to 10, comprising the steps of:
a. Arranging a riser pipe (40) extending into the tank (10) through a first pipe connection body (20) on the connection flange (14);
b. Drawing-off tank contents via the riser pipe (40);
c. Pumping the tank contents drawn-off via the riser pipe (40) by means of a pump (60);
d. Connecting the outlet (64) of the pump (60) so that both an introduction of the tank contents drawn-off via the riser pipe (40) into the tank (10) via a mixing pipe (50) extending through the first pipe connection body (20) into the tank (10) is possible, as well as an introduction of the tank contents drawn-off via the riser pipe (40) into the tank (10) via the first pipe connection body (20) is possible;
e. Introducing the drawn-off tank contents into the tank (10) and mixing the drawn-off tank contents with the remaining tank contents by means of the mixing pipe (50); and
f. Draining tank contents from the tank (10) via the first pipe connection body (20), wherein draining and mixing take place simultaneously.

12. Method according to claim 11, further comprising the step of swirling of sediment of the tank contents, when the outlet (64) of the pump is connected to the first pipe connection body (20).

13. Method according to claim 11 or 12, wherein it is used for dry hopping, and wherein the tank (10) is a fermentation tank and the tank contents comprise hop particles.

## Revendications

1. Dispositif (1) pour mélanger un contenu d'un réservoir (10), comprenant
a. un premier corps de raccordement de tuyau (20) disposé au niveau d'une collerette de raccordement (14) d'un réservoir (10) ;
b. une conduite montante (40) pénétrant dans le réservoir à travers le premier corps de raccordement de tuyau (20) ;
c. une conduite de mélange (50) pénétrant dans le réservoir à travers le premier corps de raccordement de tuyau (20) ;
d. une pompe (60) dont la sortie (64) peut être reliée au moins avec la conduite de mélange (50) et dont l'entrée (62) peut être reliée aussi bien avec le premier corps de raccordement de tuyau (20) qu'avec la conduite montante (40) ;
**caractérisé en ce que** le dispositif comporte
e. une tôle déflectrice (70) qui est fixée à la conduite montante (40) au-dessus du premier corps de raccordement de tuyau (20).

2. Dispositif selon la revendication 1, dans lequel la sortie (64) de la pompe (60) peut également être reliée au premier corps de raccordement de tuyau (20) lorsque l'entrée (62) de la pompe (60) est reliée à la conduite montante (40).

3. Dispositif selon une des revendications 1 ou 2, dans lequel la sortie (64) de la pompe (60) peut également être reliée à la conduite montante (40) lorsque l'entrée (62) de la pompe (60) est reliée au premier corps de raccordement de tuyau (20).

4. Dispositif selon une des revendications 1 à 3, dans lequel la conduite de mélange (50) s'étend à l'intérieur de la conduite montante (40), de préférence concentriquement à l'intérieur de la conduite montante (40).

5. Dispositif selon une des revendications 1 à 4, dans lequel la conduite montante (40) pénètre dans le réservoir (1) sensiblement verticalement vers le haut et/ou comporte une extrémité ouverte (42).

6. Dispositif selon une des revendications 1 à 5, dans lequel la conduite de mélange (50) peut en outre être utilisée pour prélever du contenu de réservoir.

7. Dispositif selon une des revendications 1 à 5, dans lequel une buse de mélange (52) est raccordée à l'extrémité supérieure de la conduite de mélange (50).

8. Dispositif selon la revendication 7, dans lequel la buse de mélange (52) est une pompe à jet qui est agencée pour prélever du contenu de réservoir dans le réservoir (10) et pour le mélanger à du contenu de réservoir qui est pompé vers la buse de mélange (52) par l'intermédiaire de la conduite de mélange (50).

9. Dispositif selon une des revendications 1 à 8, dans lequel l'extrémité inférieure de la conduite montante (40) est reliée à un second corps de raccordement de tuyau (30).

10. Dispositif selon une des revendications 1 à 9, dans lequel la conduite montante (40) est plus courte que la conduite de mélange (50).

11. Procédé de mélange d'un contenu d'un réservoir (10) comprenant un dispositif selon une des revendications 1 à 10 comprenant les étapes suivantes :
a. mise en place d'une conduite montante (40) pénétrant dans le réservoir (10) à travers un premier corps de raccordement de tuyau (20) disposé au niveau de la collerette de raccordement (14) ;
b. prélèvement de contenu de réservoir par l'intermédiaire de la conduite montante (40) ;
c. pompage, au moyen d'une pompe (60), du contenu de réservoir prélevé par l'intermédiaire de la conduite montante (40) ;
d. branchement de la sortie (64) de la pompe (60) de façon à permettre aussi bien une introduction du contenu de réservoir, prélevé par l'intermédiaire de la conduite montante (40), dans le réservoir (10) par l'intermédiaire d'une conduite de mélange (50) pénétrant dans le réservoir (10) à travers le premier corps de raccordement de tuyau (20) qu'une introduction du contenu de réservoir, prélevé par l'intermédiaire de la conduite montante (40), dans le réservoir (10) à travers le premier corps de raccordement de tuyau (20) ;
e. introduction du contenu de réservoir prélevé dans le réservoir (10) et mélange du contenu de réservoir prélevé avec le contenu de réservoir restant au moyen de la conduite de mélange (50) ; et
f. soutirage de contenu de réservoir hors du réservoir (10) par l'intermédiaire du premier corps de raccordement de tuyau (20), le soutirage et le mélange s'effectuant simultanément.

12. Procédé selon la revendication 11, comprenant en outre l'étape de soulèvement en tourbillons de sédiment du contenu de réservoir lorsque la sortie (64) de la pompe est reliée au premier corps de raccordement de tuyau (20).

13. Procédé selon la revendication 11 ou 12, dans lequel ledit procédé est utilisé pour le houblonnage à cru, et dans lequel le réservoir (10) est un réservoir de fermentation et le contenu de réservoir comportant des particules de houblon.
